# EUROPEAN PATENT APPLICATION

(11) **EP 4 714 571 A1**
(43) Date of publication of application: **25.03.2026**
(21) Application number: 24202297.8
(22) Date of filing: 24.09.2024
(51) Int. Cl.: B21J 15/02, B21J 15/32, B23P 19/00

(54) **SUPPLY SYSTEM FOR SUPPLYING A SETTING TOOL WITH A PLURALITY OF JOINING ELEMENTS**

(71) Applicant: Newfrey LLC, New Britain, CT 06053 (US)
(72) Inventor: TRIPP, Andreas, 35394 Gießen (DE); LIPPERT, Stefan, 35394 Gießen (DE); BECKER, Adrian, 35394 Gießen (DE)
(74) Representative: SBD IPAdmin

(57) **Abstract**

Method for supplying a joining element to a setting tool, joining device and supply system for supplying a setting tool (12) with a plurality of joining elements (18) having: a magazine (20) comprising a storage plate (22) having a plurality of defined arranged chambers (24),
an actuation member (28) configured to move a joining element (18) outside of a chamber (24) of the magazine (20),
wherein
the actuation member (28) comprises a flexible, linear thrust element (30) and a pushrod (32) configured to contact the joining element (18),
wherein the pushrod (32) is arranged at a free end of the flexible, linear thrust element (30),
the linear thrust element (30) and the pushrod (32) being adapted to move between a retracted position and an extended position to push a joining element (18) outside of a chamber (24).

## Description

The present disclosure relates to a supply system for supplying a setting tool with a plurality of joining elements, a joining device comprising a setting tool and a supply system and a method for supplying a joining element to a setting tool. The joining elements are to be used for carrying out an assembly activity.

Current methods of fastening or joining work pieces together can include the use of joining elements, for example, rivets, self-piercing rivets, flow drill rivets, blind rivets, weld studs. In the mass production of larger technical devices, for example vehicles, a plurality of rivet or other joining elements connections may be regularly produced.

The joining elements are for instance stored in a magazine which can be removably attached to the joining device and supplied to the setting tool on a need basis. EP3141318B1 for instance discloses such magazine.

Traditionally, compressed air has been employed as a means to supply these joining elements to the setting tool during the assembly process. However, this conventional approach suffers from several significant drawbacks.

Firstly, compressed air-based supply systems are inherently limited by the availability and accessibility of compressed air sources. This reliance on external air compressors or centralized air supply systems can lead to logistical challenges, especially in remote or mobile assembly environments. Additionally, the need for compressed air infrastructure increases the overall complexity and cost of implementing such systems.

Secondly, compressed air-based supply systems are prone to pressure fluctuations, which can adversely affect the performance and reliability of the setting tool. Inconsistent air pressure can result in variations in the torque applied during the fastening process, leading to suboptimal joint integrity and potential assembly failures. Moreover, the use of compressed air can generate excessive noise levels, causing discomfort and potential health hazards for operators.

Furthermore, compressed air-based supply systems often suffer from inefficiencies in terms of energy consumption. The continuous operation of air compressors and the associated energy losses during air compression and transmission contribute to higher energy costs and environmental impact.

EP4159363B1 for instance discloses a tool which permits a convenient dispensing of individual fastening elements from a plurality of fastening elements which are present in a receiving container, wherein the tool does not have to be supplied with power, however, via a compressed air hose.

However, there is still a need for an improved supply system that overcomes the aforementioned disadvantages of conventional devices utilizing compressed air for supplying joining elements to setting tools in the automotive industry.

An object of the present invention is therefore to provide a supply system for supplying a setting tool with a plurality of joining elements according to claim 1, a joining device according to claim 14 and a method for supplying a joining element to a setting tool according to claim 15.

More particularly, the supply system for supplying a setting tool with a plurality of joining elements has a magazine comprising a storage plate having a plurality of defined arranged chambers, and an actuation member configured to move a joining element outside of a chamber of the magazine. The actuation member comprises a flexible, linear thrust element and a pushrod configured to contact the joining element, wherein the pushrod is arranged at a free end of the flexible, linear thrust element. The linear thrust element and the pushrod being adapted to move between a retracted position and an extended position to push a joining element outside of a chamber.

Such supply system is configured to provide individual joining elements, one after the other, reliably, repeatedly and in a simple manner, without the necessity for a compressed air line.

In an embodiment, the actuation member further comprises a winding mechanism with a winding wheel movable with regard to a winding housing around a winding axis, and wherein the thrust element is attached to the winding wheel. The linear thrust element and the pushrod can easily cooperate with the winding mechanism.

In an embodiment, the winding wheel is movable in a first and a second direction, opposite the first direction. For instance, an electric actuator may control the motion of the winding wheel in a first and a second direction. In another embodiment, an elastic automatic return may be implemented.

In an embodiment, the thrust element is wound (or coiled) around the winding wheel. The motion of the winding wheel is thus directly transferred to the thrust element.

In an embodiment, the storage plate is a ring rotatable along a storage axis and, wherein the storage axis is substantially perpendicular to the winding axis. For instance, the storage plate is rotatable in a specific angle by means of an actuator. The orthogonal arrangement allows a compact system.

In an embodiment, the winding housing comprises an exit channel adapted to receive the pushrod, wherein an end of the exit channel is provided with a locking element adapted to move between:
an open position, in which a chamber is freely accessible and the pushrod may be moved in an extended position, and
a closed position, in which the pushrod is prevented from moving into the chamber and remains in a retracted position.

The locking element prevent an unwanted movement of a joining element. Thus, the joining element may only move in one direction, wherein the pushrod can protrude within the chamber to push the joining element outside of said chamber.

In an embodiment, the locking element is spring loaded, wherein the closed position is a stable position, and wherein the locking element is moved from the closed position to the open position by the pusher. Thus, the locking element is passively moved from a closed position to an open position without the need of a further electrical drive.

In an embodiment, the supply system further comprises a feeding tube, and the winding housing defines a recess adapted to receive the storage plate, such that a chamber of the storage plate is arranged between the pushrod in a retracted position and the feeding tube, the pushrod being adapted to move into the chamber and the feeding tube to push a joining element from the chamber up to the feeding tube and/or a joining position. Thus, no need to have any other means to move the joining element up to its joining position in a setting tool.

In an embodiment, the pushrod comprises a plug-in lug receiving the free end of the wire and a pusher configured to contact a joining element. The pushrod thus can easily push the joining element and is securely assembled to the thrust element.

In an embodiment, the pusher is movably arranged on the plug-in lug. The pusher can freely rotate. This prevents the pusher from getting stuck in the feeding channel or on the winding housing.

In an embodiment, the pusher is flat with a circular cross-section. The pusher is compact, such that the dimension of the feeding channel does not need to be adapted to the pusher and remains adapted to the joining element.

In an embodiment, wherein the storage plate is movable with regard to the actuation member such that each chamber of the storage plate may be arranged facing the pusher. For instance, the storage plate rotates such that the exit of the winding housing faces each of the chamber and the pushrod may push each joining element in each chamber outside of said chambers.

In an embodiment, each chamber has a first and a second opening, wherein the first opening is arranged opposite the second opening. The first opening is for example for filling-in the joining element, wherein the second opening is for the joining element to exit within the feeding channel for instance.

In an embodiment, the magazine is removably connected to the actuation member. Thus, the magazine can be taken away from the actuation member to be filled with joining elements.

The present invention is also directed to a joining device comprising a setting tool adapted to set a joining element into a workpiece and a supply system as disclosed, wherein the supply system comprises a feeding tube, and wherein the pushrod is adapted to push a joining element from the supply system up to the setting tool.

In an embodiment, the supply system may be removably connected to the setting tool. In an alternative or additional embodiment, the magazine may be removably connected to the setting tool and the actuation member.

Finally, the present invention is directed to a method for supplying a joining element to a setting tool comprising the steps of providing a supply system as disclosed with a joining element arranged in at least one chamber and pushing the joining element outside of the chamber with the pushrod, wherein the joining element is moved up to the setting tool without pneumatic air.

The invention and its advantages will be better understood from the reading of the following description, given by way of example only and with reference to the accompanying drawings, of which:
Fig. 1 shows a side view of a joining device comprising a supply system according to the invention and a joining or setting tool;
Fig. 2 shows a perspective view of the supply system according to the invention of Fig. 1 with a magazine, an actuation member and a feeding tube;
Fig 3 shows a perspective view of the supply system of Fig. 2, wherein a cap of the magazine has been removed to show the storage chambers;
Fig. 4 shows a side view of the of the supply system of Fig. 2 with a cap of the actuation member being removed to show a winding wheel, a winding housing and a linear thrust element with a pushrod;
Fig. 5A, Fig. 5B, Fig. 5C show a cross-section view of a detail of the supply system of

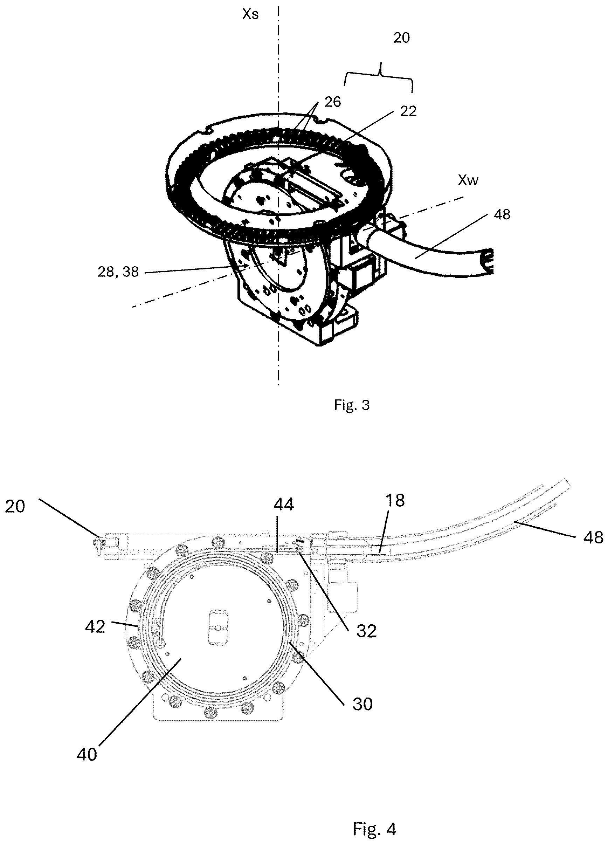

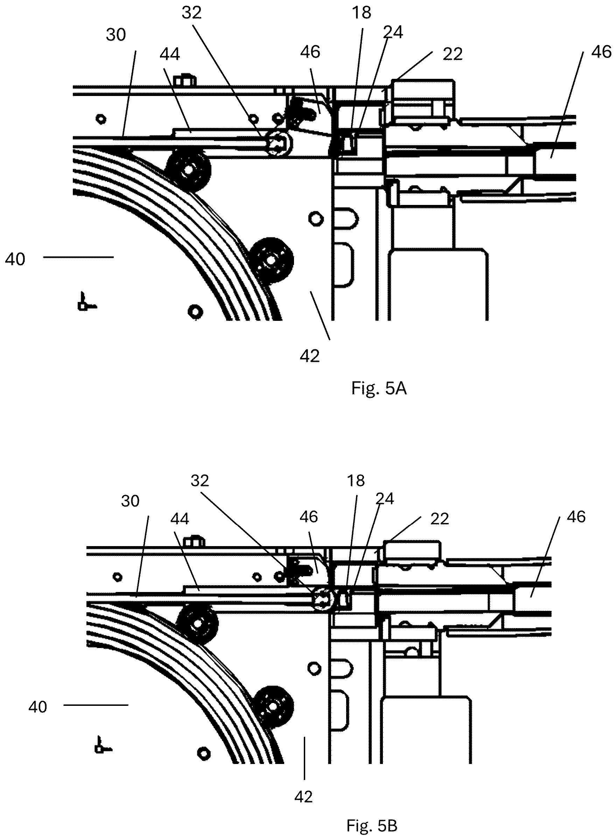

Fig. 4, with the winding housing comprising a locking element, wherein in Fig. 5A the locking element is closed and the pushrod is in a retracted position, in Fig. 5B, the pushrod opens the locking element and contacts a joining element inside a chamber of the magazine, and in Fig, 5C the pushrod further drives the joining element outside of said chamber;

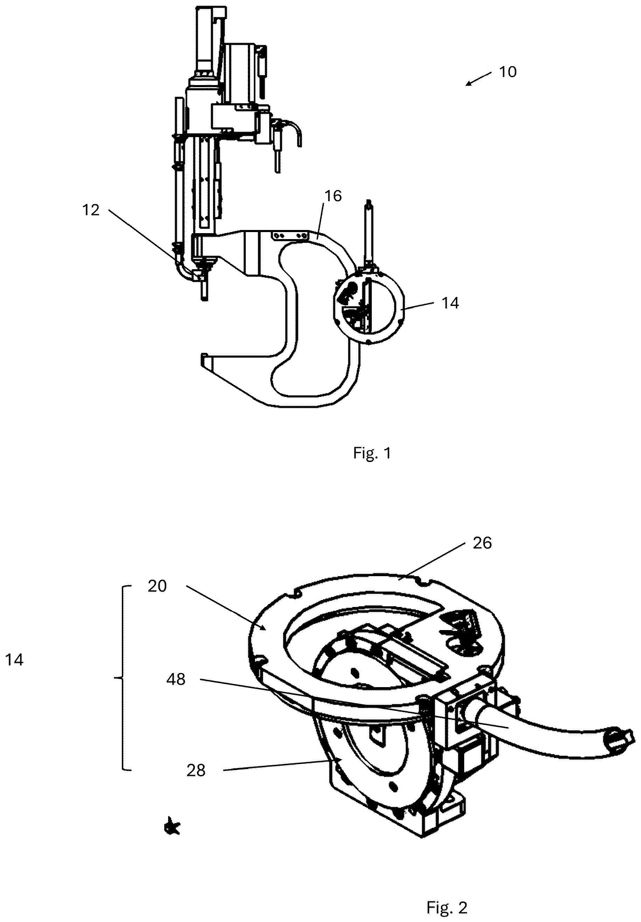

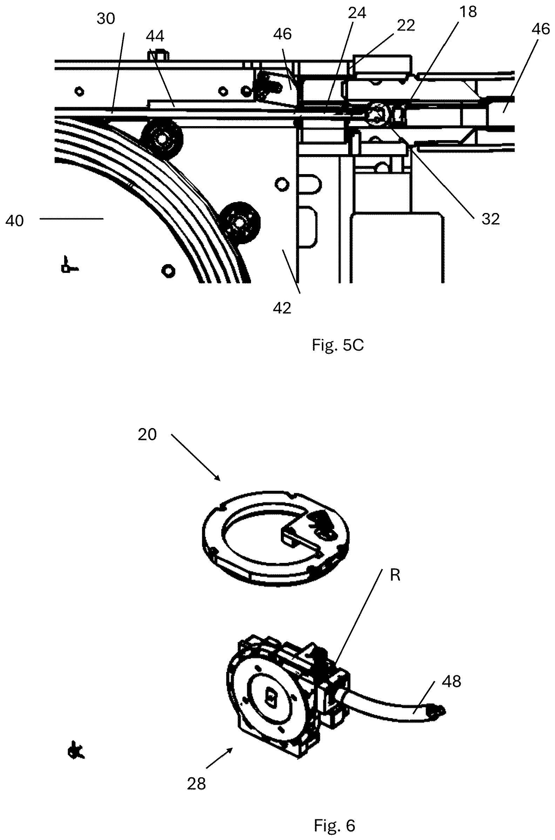

Fig. 6 shows the supply system of Fig. 2, wherein the magazine is detached from the actuation member;

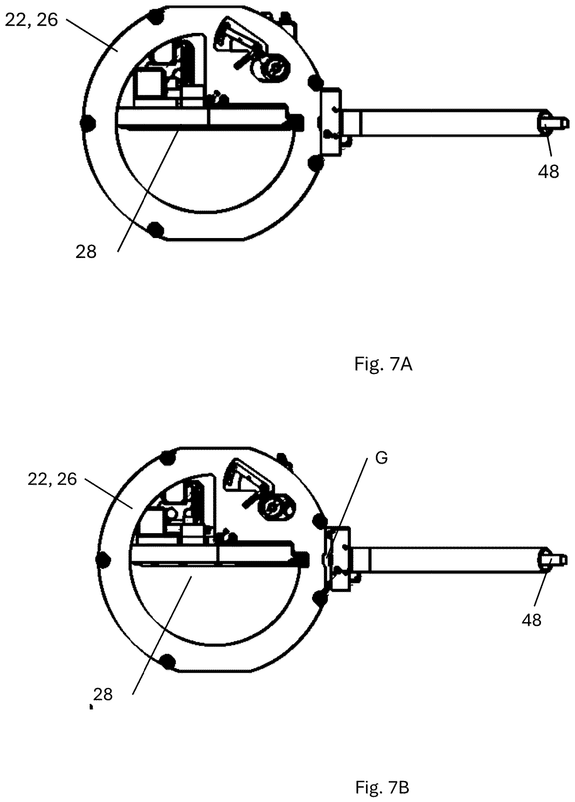

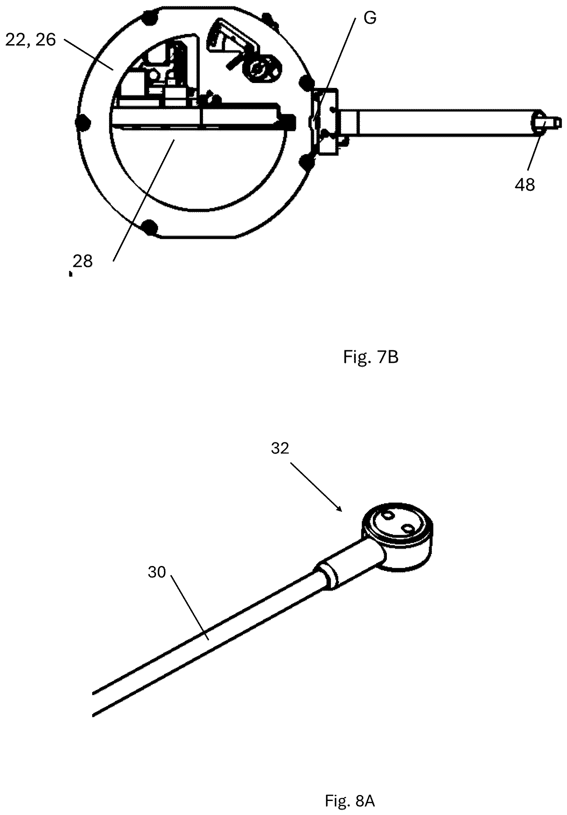

Fig. 7A and fig. 7B show a top view of the supply system, wherein in Fig. 7A the magazine is docked to the actuation member, and wherein in Fig. 7B the magazine is undocked from the actuation member;

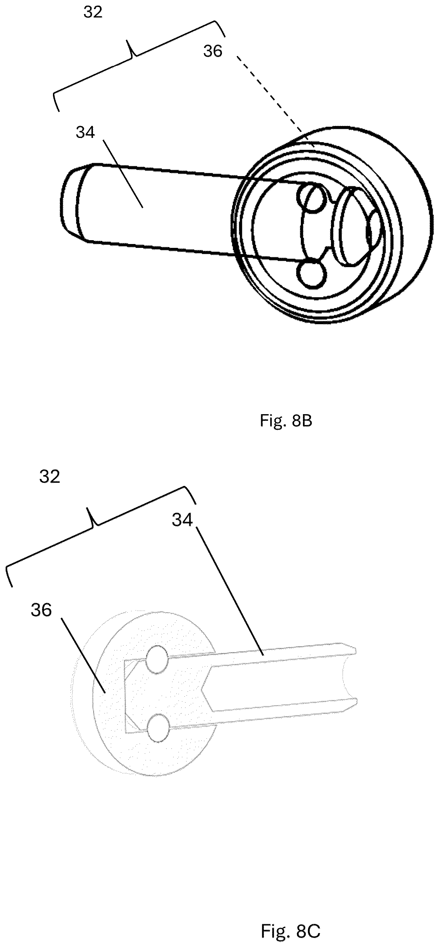

Fig. 8A, Fig. 8B and Fig. 8C show in detail the pushrod with an end of the thrust element, in different views.

The embodiments of the disclosure will be best understood by reference to the drawings, wherein the same reference signs designate identical or similar elements. It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure.

Fig. 1 shows a side view of a joining device 10 with a setting tool 12 and a supply system 14. More particularly, Fig. 1 shows a side view of a self-pierce riveting tool. However, the present invention is not limited to self-piercing rivet technology, but can also be applied to stud welding or other joining devices utilizing various types of joining elements for the purpose of joining or fastening workpieces or parts.

For illustrative purposes only, the joining device 10 comprises a mount 16 and the setting tool 12 is assembled to the mount. The supply system 14 is also connected to the mount. The connection may be a removable connection or a fixed connection.

The joining device 10 is adapted to carry out a method for joining a workpiece arrangement W or fastening parts to a workpiece arrangement, with a joining element 18. The joining device 10 can be moved freely in the space by means of a robot (not represented). In a non-limiting way, the setting tool may be a self-piercing rivet setting tool or a blind fastener setting tool, or a tool for setting screws, or a stud welding joining tool.

The setting tool 12 is configured to receive joining elements from the supply system 14.

As depicted in Fig. 2, the supply system 14 comprises a magazine 20 with a storage plate 22 having a plurality of defined arranged chambers 24. Each chamber is configured to receive one joining element 18. For instance, each chamber comprises a first and a second opening, and the joining element may be inserted into the first opening and exits the chamber through the second opening. For instance, the storage plate 22 is a ring rotatable along a storage axis. The chambers 24 may be evenly distributed around the storage axis (as visible in Fig. 3). The first and second opening of each chamber are such that the first opening is opposite the second opening and both are provided on lateral sides of the ring. For instance, the first opening is accessible from the inside of the ring forming the storage plate, wherein the second opening is accessible from the outside. A magazine cap 26 may be provided to cover the chamber from a top side and from the lateral side in order to at least partly close the plurality of chamber, the magazine cap being such that at least the first and the second openings of one chamber remain open for a joining element inside this chamber to be actuated up to the setting tool by an actuation member 28 of the supply system 14.

The actuation member 28 cooperates with the magazine for delivering a joining element to the setting tool every time it is necessary for undertaking a joining step. The actuation member 28 comprises a flexible, linear thrust element 30 and a pushrod 32 configured to contact a joining element, and to drive said joining element.

The pushrod 32 is arranged at a free end 33 of the flexible, linear thrust element 30. The pushrod 32 and the free end of the thrust element are more particularly depicted in Figs. 8A, 8B and 8C. As visible in Fig. 8A, which is a perspective view, the pushrod 32 comprises a plug-in lug 34 receiving the free end of the thrust element and a pusher 36 configured to contact a joining element. Fig. 8C shows a cross-section view of the pushrod and Fig. 8B shows a perspective view of the pushrod 32 with the free end 33 of the thrust element, wherein the pusher 36 is shown transparent. The free end 33 of the thrust element is for instance crimped into the plug-in lug in a known manner. Other assembly methods such as snap fitting, glue, ... may also be used.

The pusher 36 is movably assembled to the plug-in lug 34, as better shown in Fig. 8B and Fig. 8C. For instance, the pusher rotates freely around the linear thrust element axis. The plug-in lug may be provided with a groove and a system with balls to allow the pusher to rotate freely.

As better seen in Fig. 4, the thrust element is connected to a winding mechanism 38. The winding mechanism drives the thrust element and the pushrod between retracted positions and extended positions. More particularly, the winding mechanism 38 comprises a winding wheel 40 and a winding housing 42. The winding wheel 40 is movable with regard to the winding housing 42. The winding wheel 40 is movable with regard to the winding housing 42 around a winding axis. For example, an actuator (electrical actuator for instance) moves the winding wheel. The winding wheel is movable in a first and a second direction, opposite the first direction. The thrust element is attached to the winding wheel. For instance, a second end of the thrust element is attached to the winding wheel. The thrust element may be wound (or coiled) around the winding wheel 40.

The winding housing 42 comprises an exit channel 44 adapted to receive the pushrod 32. The exit channel 44 is provided, toward its end, with a locking element 46 adapted to move between an open position, in which a chamber is freely accessible and the pushrod may be moved in an extended position, and a closed position, in which the pushrod 32 is prevented from moving into the chamber and remains in a retracted position. The locking element may be spring-loaded so that for instance its closed position is a stable position. The locking element may also be moved from the closed position to the open position. Thus, the locking element is passively actuated by the pushrod. In other embodiments, the locking element may be moved between the closed and open positions by an actuator.

Figs. 5A, 5B and 5C disclose in more details the locking element and how the pusher and the thrust element may cooperate with it.

In Fig. 5A, the locking element is in a closed position. The thrust element 30 and the pushrod 32 are in a retracted position. As visible in Fig. 5A, the feeding tube 46 may not be aligned with the chamber and a joining element may be prevented to move out of the chamber. More particularly, the entry of the feeding tube may be closed. In Fig. 5B, the feeding tube is aligned with the chamber and the exit channel (the feeding tube entry is open). The thrust element 30 and the pushrod 32 are moved toward the extended position and force the locking element into its open position. In Fig. 5C, the pushrod 32 is arranged past the locking element, which is still in the open position (for instance the thrust element forces the locking element in the open position). Once the thrust element 30 and the pushrod 32 retracts, the locking element can move back to its closed position.

The supply system, as visible in the drawings comprises further a feeding channel for feeding a joining element from the magazine to the setting tool with the actuation member. The feeding channel is for instance a feeding tube 48 comprising a first end adapted to face a second opening of a chamber. The feeding tube is for instance connected to the winding housing 42.

As depicted in Fig. 6, the winding housing 42 defines a recess R adapted to receive the storage plate 22, such that the storage axis is arranged orthogonal to the winding axis and a chamber of the storage plate may extend between the exit channel and the entry of the feeding channel or feeding tube 48. The storage plate may rotate around the storage axis such that each chamber of the magazine may be displaced to be arrange such that each a first opening is aligned with the exit channel and a second opening is aligned with the feeding channel.

Fig. 7A shows the storage plate being docked to the winding housing, whereas Fig. 7B shows the storage plate being undocked from the winding housing. As visible in Fig. 7B, in the undocked position, a gap G is visible between an end of the feeding tube and the storage plate. In Fig. 7A, the feeding tube 48 is aligned and continue with the storage plate and arranged such that a joining element from the chamber directly facing the feeding tube 48 can be pushed by the pusher from the chamber into the feeding tube 46 and then up to the setting tool 12 for its joining or fastening to a workpiece.

The magazine 20 is thus removably connected to the actuation member 28. The actuation can be fixedly connected or removable connected to a mount or to the setting tool directly. Once the magazine has been filed, it is connected to the actuation member. The actuation member can then supply the joining element to the setting tool through the linear motion of the pusher contacting and driving the joining element from the chamber to and along the feeding tube up to the setting tool.

Thus, the joining element is driven without compressed air up to the setting tool. The pusher is guided within the chamber and the feeding tube by the thrust element.

The winding wheel 40 rotates in a first direction to unwind the thrust element 30 and move forward the pusher and the pushrod 32 from the retracted position to an extended position. As soon as the pushrod passes the locking element, the pusher contacts the joining element and drive the joining element with it up to a wanted position within the setting tool.

The winding wheel rotates in the second direction, opposite the first direction, to move back the pusher from the extended position toward the retracted position, once the joining element is in its wanted position within the setting tool.
joining device 10
setting tool 12
supply system 14
mount 16
joining element 18
magazine 20
storage plate 22
chambers 24
magazine cap 26
actuation member 28
thrust element 30
pushrod 32
a free end 33
plug-in lug 34
a pusher 36
winding mechanism 38
a winding wheel 40
a winding housing 42
winding axis Xw
storage axis Xs
exit channel 44
locking element 46
feeding tube 48
gap G
recess R

## Claims

1. Supply system (14) for supplying a setting tool (12) with a plurality of joining elements (18) having:
a magazine (20) comprising a storage plate (22) having a plurality of defined arranged chambers (24),
an actuation member (28) configured to move a joining element (18) outside of a chamber (24) of the magazine (20),
**characterized in that**
the actuation member (28) comprises a flexible, linear thrust element (30) and a pushrod (32) configured to contact the joining element (18),
wherein the pushrod (32) is arranged at a free end of the flexible, linear thrust element (30),
the linear thrust element (30) and the pushrod (32) being adapted to move between a retracted position and an extended position to push a joining element (18) outside of a chamber (24).

2. Supply system (14) according to claim 1, wherein the actuation member (28) further comprises a winding mechanism (38) with a winding wheel (40) movable with regard to a winding housing (42) around a winding axis (Xw), and wherein the thrust element is attached to the winding wheel.

3. Supply system (14) according to claim 2, wherein the winding wheel (40) is movable in a first and a second direction, opposite the first direction.

4. Supply system (14) according to claim 2 or 3, wherein the thrust element (30) is wound (or coiled) around the winding wheel.

5. Supply system (14) according to any of claims 2 to 4, wherein the storage plate (22) is a ring rotatable along a storage axis (Xs) and, wherein the storage axis is substantially perpendicular to the winding axis.

6. Supply system (14) according to any of claims 2 to 5, wherein the winding housing (42) comprises an exit channel (44) adapted to receive the pushrod (32), wherein an end of the exit channel is provided with a locking element (46) adapted to move between:
- an open position, in which a chamber is freely accessible and the pushrod may be moved in an extended position, and
- a closed position, in which the pushrod is prevented from moving into the chamber and remains in a retracted position.

7. Supply system (14) according to claim 6, wherein the locking element (46) is spring loaded, wherein the closed position is a stable position, and wherein the locking element is moved from the closed position to the open position by the pushrod (32).

8. Supply system (14) according to any of claims 2 to 7, further comprising a feeding tube (48), and wherein the winding housing (42) defines a recess adapted to receive the storage plate (22), such that a chamber of the storage plate is arranged between the pushrod in a retracted position and the feeding tube, the pushrod being adapted to move into the chamber and the feeding tube to push a joining element from the chamber up to the feeding tube and/or a joining position.

9. Supply system (14) according to any of claims 1 to 8, wherein the pushrod (32) comprises a plug-in lug (34) receiving the free end of the thrust element and a pusher (36) configured to contact a joining element.

10. Supply system (14) according to claim 9, wherein the pusher (36) is movably arranged on the plug-in lug.

11. Supply system (14) according to claim 9 or 10, wherein the pusher (36) is flat with a circular cross-section.

12. Supply system (14) according to any of claims 1 to 11, wherein the storage plate (22) is movable with regard to the actuation member such that each chamber of the storage plate may be arranged facing the pusher.

13. Supply system (14) according to any of claims 1 to 12, wherein each chamber (24) has a first and a second opening, wherein the first opening is arranged opposite the second opening.

14. Joining device (10) comprising a setting tool (12) adapted to set a joining element into a workpiece and a supply system (14) according to any of claims 1 to 13, wherein the supply system comprises a feeding tube (48), and wherein the pushrod is adapted to push a joining element from the supply system up to the setting tool (12).

15. Method for supplying a joining element to a setting tool comprising the steps of:
- Providing a supply system (14) according to any of claims 1 to 13,
- Providing a joining element (18) arranged in a chamber of the storage plate,
- Pushing the joining element outside of the chamber with the pushrod up to the setting tool,
Wherein the joining element (18) is moved up to the setting tool without compressed air.
